# EUROPEAN PATENT SPECIFICATION

(11) **EP 2 189 504 B1**
(45) Date of publication and mention of the grant of the patent: **05.04.2017**
(21) Application number: 09177105.5
(22) Date of filing: 25.11.2009
(51) Int. Cl.: C09D 1/00, C04B 41/87, C04B 41/89, C04B 41/00, C04B 41/50, C09D 5/44, C09D 7/12, C08K 3/14, C08K 3/28, F01D 5/28, C04B 41/52

(54) **Reinforced oxide coatings**
Verstärkte Oxidbeschichtungen
Revêtements d'oxyde renforcé

(30) Priority: 25.11.2008 US 117770 P
(43) Date of publication of application: 26.05.2010
(73) Proprietor: Rolls-Royce Corporation, Indianapolis, IN 46241 (US)
(72) Inventor: Lee, Kang, Zionsville, IN 46077 (US)
(74) Representative: HGF Limited

(56) References cited:
- EP-A1- 0 117 935
- EP-A1- 0 802 172

## Description

### TECHNICAL FIELD

The present disclosure relates to oxide coatings.

### BACKGROUND

The components of high-temperature mechanical systems, such as, for example, gas turbine engines, must operate in severe environments. For example, the high-pressure turbine blades and vanes exposed to hot gases in commercial aeronautical engines typically experience metal surface temperatures of about 1000°C, with short-term peaks as high as 1100°C.

Typical components of high-temperature mechanical systems include a Ni or Co-based superalloy substrate. The substrate can be coated with a thermal barrier coating (TBC) to reduce surface temperatures. The thermal barrier coating may include a thermally insulative ceramic topcoat, and is bonded to the substrate by an underlying metallic bond coat.

The TBC, usually applied either by air plasma spraying or electron beam physical vapor deposition, is most often a layer of yttria-stabilized zirconia (YSZ) with a thickness of about 100-500 µm. The properties of YSZ include low thermal conductivity, high oxygen permeability, and a relatively high coefficient of thermal expansion. The YSZ TBC is also typically made "strain tolerant" and the thermal conductivity further lowered by depositing a structure that contains numerous pores and/or pathways.

Economic and environmental concerns, i.e., the desire for improved efficiency and reduced emissions, continue to drive the development of advanced gas turbine engines with higher inlet temperatures. In some cases, this may lead to the replacement of the superalloy substrate with a silicon-based ceramic or ceramic matrix composite (CMC) substrate. Silicon-based ceramics or CMCs possess excellent high temperature mechanical, physical and chemical properties, which allow gas turbine engines to operate at higher temperatures than gas-turbine engines having superalloy components.

However, silicon-based ceramics and CMCs suffer from rapid recession in combustion environments due to the volatilization of silica by water vapor. Thus, silicon-based ceramic and CMC substrates may be coated by an environmental barrier coating (EBC), which protects the substrate from water vapor attack. Additionally, the EBC may thermally insulate the substrate, and an additional TBC may be provided over the EBC to further thermally insulate the silicon-based ceramic or CMC substrate.

### SUMMARY

While a TBC or EBC may provide beneficial thermal and/or environmental protection for the substrate on which the TBC or EBC is deposited, TBCs and EBCs generally possess relatively low fracture toughness. Accordingly, a TBC or EBC easily may be damaged by, for example, debris that impacts the TBC or EBC during operation of a gas turbine engine. This may reduce the service life of an article coated with a TBC or EBC.

In general, the present disclosure is directed to a reinforced coating including an oxide matrix and a reinforcement within the oxide matrix. The reinforced coating may be a TBC, EBC, or bond coat, and may be deposited over a substrate. The reinforcement may improve the fracture toughness of the reinforced coating compared to a coating including the oxide matrix and no reinforcement. In some embodiments, other layers may be deposited over the substrate in addition to the reinforced coating, including, for example, one or more additional oxide layers and/or a bond coat.

In one aspect, the disclosure is directed to a reinforced coating including an oxide matrix and a reinforcement within the oxide matrix. The reinforcement may include at least one of SiC and Si₃N₄.

In another aspect, the disclosure is directed to an article including a substrate and a reinforced coating deposited over the substrate. The reinforced coating includes an oxide matrix and a reinforcement within the oxide matrix, and the reinforcement comprises at least one of SiC and Si₃N₄.

In another aspect, the disclosure is directed to a method that includes depositing over a substrate a coating composition including an oxide matrix and a reinforcement within the oxide matrix. The reinforcement may include at least one of SiC and Si₃N₄.

A TBC formed as a reinforced coating of the present disclosure may provide improved fracture toughness while still providing desirable thermal insulation for the substrate over which the TBC is deposited. Similarly, an EBC formed as a reinforced coating as described in the present disclosure may provide improved fracture toughness while still providing desirable environmental protection for the substrate over which the EBC is deposited. Increased fracture toughness may result in an increased service life for the article that is coated with the reinforced coating.

The details of one or more embodiments are set forth in the accompanying drawings and the description below. Other features, objects, and advantages will be apparent from the description and drawings, and from the claims.

### BRIEF DESCRIPTION OF DRAWINGS

FIG. 1 is a conceptual diagram illustrating an example article including a reinforced coating deposited over a substrate.
FIG. 2 is a conceptual diagram of another example article including a reinforced coating deposited over a substrate.
FIG. 3 is a conceptual diagram of another example article including a reinforced coating deposited over a substrate.
FIG. 4 is a cross-sectional view illustrating an example article including a reinforced environmental barrier coating deposited over a substrate and a reinforced thermal barrier coating deposited over the reinforced environmental barrier coating.
FIG. 5 is a cross-sectional view illustrating an example article including a reinforced coating deposited over a bond coat, which is deposited over a substrate.
FIG. 6 is a cross-sectional view illustrating an example article including a first oxide layer deposited over a reinforced coating, which is deposited over a second oxide layer, which is deposited over a substrate.

### DETAILED DESCRIPTION

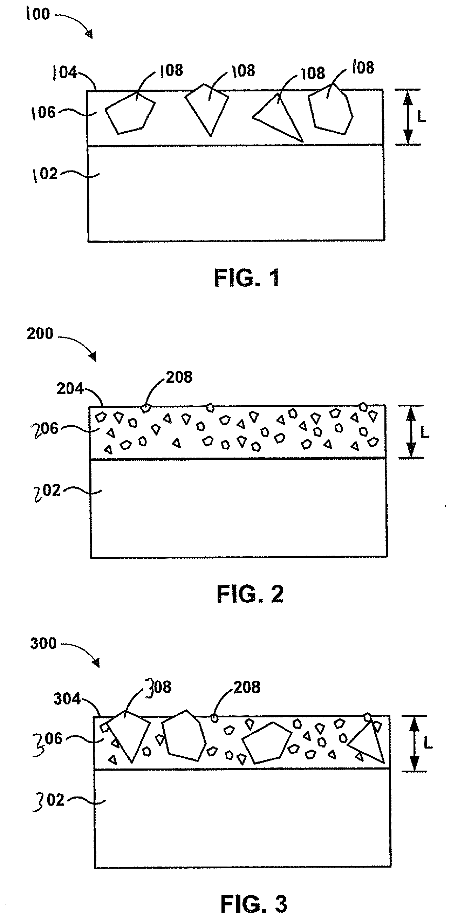

FIG. 1 is a conceptual diagram that illustrates an exemplary article 100 used in a high-temperature mechanical system. Article 100 includes a reinforced coating 104 deposited over a substrate 102. In some embodiments, as illustrated in FIG. 1, reinforced coating 104 may be deposited directly on substrate 102. As used herein, "deposited over" is defined as a layer that is deposited on top of another layer, and encompasses both a first layer deposited immediately adjacent a second layer and a first layer deposited on top of a second layer with one or more intermediate layer present between the first and second layers. In contrast, "deposited directly on" denotes a layer that is deposited immediately adjacent another layer, i.e., there are no intermediate layers.

Substrate 102 may be a component of a high temperature mechanical system, such as, for example, a gas turbine engine or the like. In some embodiments, substrate 102 may include a superalloy, such as a superalloy based on Ni, Co, Ni/Fe, and the like. A substrate 102 including a superalloy may include other additive elements to alter its mechanical properties, such as toughness, hardness, temperature stability, corrosion resistance, oxidation resistance, and the like, as is well known in the art. Any useful superalloy may be utilized for substrate 102, including, for example, those available from Martin-Marietta Corp., Bethesda, MD, under the trade designation MAR-M247; those available from Cannon-Muskegon Corp., Muskegon, MI, under the trade designation CMSX-4 and CMXS-10; and the like.

In other embodiments, substrate 102 may include a ceramic or ceramic matrix composite (CMC). A substrate 102 including a ceramic or CMC may include any useful ceramic material, including, for example, silicon carbide, silicon nitride, alumina, silica, and the like. The CMC may further include any desired filler material, and the filler material may include a continuous reinforcement or a discontinuous reinforcement. For example, the filler material may include discontinuous whiskers, platelets, or particulates. As another example, the filler material may include a continuous monofilament or multifilament weave.

The filler composition, shape, size, and the like may be selected to provide the desired properties to the CMC. For example, in some embodiments, the filler material may be chosen to increase the toughness of a brittle ceramic matrix. In other embodiments, the filler may be chosen to provide a desired property to the CMC, such as thermal conductivity, electrical conductivity, thermal expansion, hardness, or the like.

In some embodiments, the filler composition may be the same as the ceramic matrix material. For example, a silicon carbide matrix may surround silicon carbide whiskers. In other embodiments, the filler material may comprise a different composition than the ceramic matrix, such as aluminum silicate fibers in an alumina matrix, or the like. One preferred CMC includes silicon carbide continuous fibers embedded in a silicon carbide matrix.

Some example ceramics and CMCs which may be used for substrate 102 include ceramics containing Si, such as SiC and Si₃N₄; composites of SiC or Si₃N₄ and silicon oxynitride or silicon aluminum oxynitride; metal alloys that include Si, such as a molybdenum-silicon alloy (e.g., MoSi₂) or niobium-silicon alloys (e.g., NbSi₂); and oxide-oxide ceramics, such as an alumina or aluminosilicate matrix with a NEXTEL™ Ceramic Oxide Fiber 720 (available from 3M Co., St. Paul, MN).

As described above, a substrate 102 based on a superalloy may be coated with a TBC to provide thermal insulation for substrate 102 and reduce the temperatures experienced by substrate 102, while a substrate 102 including a ceramic or CMC may be coated with an EBC to protect the substrate 102 from water vapor attack. In addition, in some embodiments, a substrate 102 including a ceramic or CMC may have a TBC deposited over or deposited directly on the EBC to provide further thermal insulation for the substrate 100.

A TBC may be deposited as a porous structure, which may increase the stress tolerance and decrease the effective thermal conductivity of the TBC. For example, the pores in the TBC may reduce the thermal conductivity by reducing the area through which heat is conducted and by providing a large refractive index difference between the pores and the material from which the TBC is formed, which can reduce heat transfer by radiation. In contrast, an EBC may be deposited with little or substantially no porosity, as the EBC is designed to reduce or eliminate exposure of substrate 102 to water vapor or other vapors present in the environment in which article 100 is used. TBCs and EBCs may be deposited as monolithic materials; e.g., they may not include domains of a second material within a matrix of a first material.

While the TBC and EBC provide effective thermal insulation and environmental protection of substrate 102, respectively, each may possess relatively low fracture toughness, at least in part because TBCs and EBCs are deposited as monolithic materials. This may result in a coating that is relatively easy to damage, and may lead to a reduced service life of an article 100 including a TBC and/or EBC.

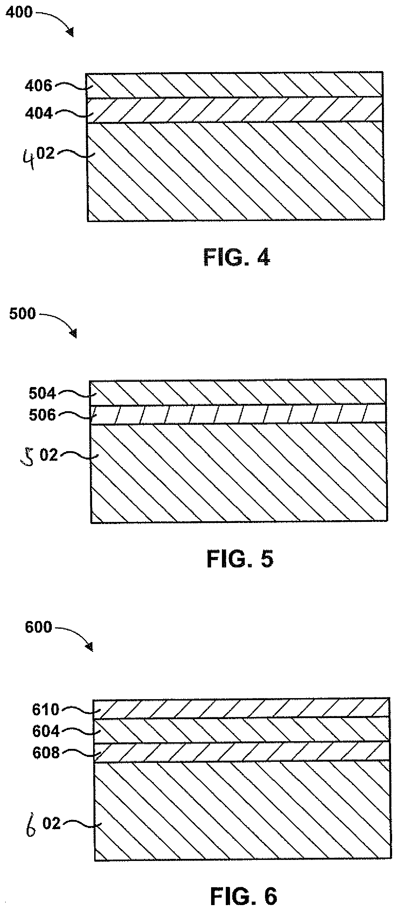

In order to improve fracture toughness of a TBC or EBC, the TBC or EBC may be deposited over substrate 102 as a reinforced coating 104. In the example illustrated in FIG. 1, reinforced coating 104 is deposited directly on substrate 102, while in other embodiments, such as those illustrated in FIGS. 5 and 6, a reinforced coating may be deposited over substrate 102 with intermediate layers present between the reinforced coating and substrate 102. Reinforced coating 104 may include a reinforcement 108 within an oxide matrix 106. Oxide matrix 106 may include any TBC or EBC material, such as, for example, alumina, zirconia, hafnia, rare earth oxide-stabilized zirconia, rare earth oxide-stabilized hafnia, a rare earth silicate, a glass ceramic, mullite, or the like, and may include combinations of two or more TBC or EBC materials.

The rare earth oxide-stabilized zirconia and rare earth oxide-stabilized hafnia may include oxides of rare earth elements, including, for example, oxides of Sc, Y, La, Ce, Pr, Nd, Pm, Sm, Eu, Gd, Tb, Dy, Ho, Er, Tm, Yb, Lu, and combinations thereof.

The rare earth silicate may be formed by mixtures of one or more rare earth oxide with silica (SiO₂) in approximately a 1:1 or 1:2 rare earth oxide:silica ratio. For example, the rare earth silicate may include a rare earth monosilicate, represented as RE₂SiO₅, where RE is a rare earth element, a rare earth disilicate, represented as RE₂Si₂O₇, where RE is a rare earth element, or both. In some embodiments, the rare earth silicate may also include a rare earth oxide or silica (e.g., in mixtures including ratios of rare earth oxide:silica other than 1:1 or 1:2).

The glass ceramic may include, for example, barium strontium alumina silicate (BaOₓ-SrO₁₋ₓ-Al₂O₃-2SiO₂; BSAS), barium alumina silicate (BaO-Al₂O₃-2SiO₂; BAS), strontium alumina silicate (SrO-Al₂O₃-2SiO₂; SAS), calcium alumina silicate (CaO-Al₂O₃-2SiO₂; CAS), magnesium alumina silicate (2MgO-2Al₂O₃-5SiO₂; MAS) and lithium alumina silicate (Li₂O-Al₂O₃-2SiO₂; LAS); and the like.

In some embodiments, reinforcement 108 may include at least one of SiC and Si₃N₄. Reinforcement 108 may be formed as particles, whiskers, platelets, chopped fibers or the like, and may be selected to provide the desired properties to reinforced coating 102. Reinforcement 108 may generally range in size up to a thickness L of reinforced coating 104, as illustrated in FIG. 1. In other embodiments, as illustrated in FIG. 2, an article 200 may include a reinforced coating 204, which may include a reinforcement 208 that is much smaller that the thickness L of the reinforced coating 204. In some embodiments, as illustrated in FIG. 3, an article may include a reinforced coating 304 that includes a mixture of larger reinforcement 108 and smaller reinforcement 208. Together, the size and shape of the reinforcement 108, 208 (hereafter "reinforcement 108") may contribute to properties of reinforced coating 104. In some embodiments, reinforcement 108 may have a size up to about 500 microns, preferably about 20 microns to about 200 microns, and more preferably about 50 microns to about 150 microns.

The shape and/or size of reinforcement 108 may influence the properties of reinforced layer 104, such as, for example, an effective thermal conductivity of reinforced layer 104. For instance, a larger reinforcement 108 may reduce porosity of porous reinforced layer 104, which may increase the effective thermal conductivity of the layer 104. In this example, it may be desirable to utilize smaller reinforcement particles, whiskers, platelets, chopped fibers or the like, while maintaining a size of reinforcement 108 that provides increased fracture toughness. As another example, in embodiments in which reinforced coating 104 is applied to a turbine blade tip, reinforcement 108 may be selected to have an angular shape, which may improve abrasiveness of reinforced coating 104. As a further example, in embodiments in which reinforced coating 104 is to provide impact resistance, reinforcement 108 may be selected to have a large aspect ratio (e.g., a size in at least one dimension that is significantly greater than a size in another dimension).

Reinforced coating 104 may be deposited over substrate 102 using, for example, plasma spraying, physical vapor deposition, cathodic arc deposition, chemical vapor deposition, slurry dip coating, sol-gel coating, electrophoretic deposition, or the like.

When depositing reinforced coating 104 using plasma spraying, oxide matrix 106 may comprise a material that can be melted. For example, SiC and Si₃N₄ do not melt at temperatures used for plasma spraying. Thus, to deposit reinforced coating 104, the reinforcement 108 may be encapsulated in a meltable oxide matrix, which results in a plasma-sprayable coating 104.

In some embodiments, it may be important to provide a reinforcement 108 that is well mixed in oxide matrix 106 to provide improved properties, such as impact resistance or the like. The process by which the reinforcement 108 is mixed into oxide matrix 106 may influence the exfoliation of the reinforcement 108, and sol-gel, slurry or spray coating processes may provide greater exfoliation of the reinforcement 108.

In some embodiments, as illustrated in FIG. 4, an article 400 may include a reinforced EBC 404 deposited over or deposited directly on substrate 102 and a reinforced TBC 406 deposited over or deposited directly on EBC 404. As described above, a substrate 102 including a ceramic or CMC may have an EBC deposited over substrate 102 to provide protection from water vapor attack and some thermal insulation, and a TBC deposited over the EBC to provide further thermal insulation. In some embodiments, as illustrated in FIG. 4, the EBC may be a reinforced EBC 404 and the TBC may be a reinforced TBC 406. In other embodiments, only one of the EBC or the TBC may be a reinforced coating.

Reinforced EBC 404 may include an oxide matrix (e.g, oxide matrix 106) and a reinforcement (e.g., reinforcement 108). The oxide matrix may include, for example, rare earth silicates; mullite; alumina; glass ceramics such as BSAS, BAS, SAS, CAS, MAS and LAS; and the like. The reinforcement in reinforced EBC 404 may include SiC, Si₃N₄, and the like, and may be present as particles, whiskers, platelets, chopped fibers or the like.

Reinforced TBC 406 also may include an oxide matrix and a reinforcement. The oxide matrix may include, for example, zirconia, hafnia, a rare earth oxide-stabilized zirconia, a rare earth oxide-stabilized hafnia, or the like. The reinforcement in reinforced TBC 406 may include SiC, Si₃N₄, and the like, and may be present as particles, whiskers, platelets, chopped fibers or the like.

In some embodiments, a reinforced coating may be deposited over or deposited directly on a bond coat. For example, as illustrated in FIG. 5, reinforced coating 504 may be deposited directly on bond coat 506. Bond coat 506 may improve adhesion between reinforced coating 504 and substrate 102. In some embodiments, substrate 102 may include a superalloy, and bond coat 506 may include an alloy, such as a conventional MCrAIY alloy (where M is Ni, Co, or NiCo), a β-NiAl nickel aluminide alloy (either unmodified or modified by Pt, Cr, Hf, Zr, Y, Si, and combinations thereof), a γ-Ni + γ'-Ni₃Al nickel aluminide alloy (either unmodified or modified by Pt, Cr, Hf, Zr, Y, Si, and combinations thereof), or the like.

In other embodiments, bond coat 506 may include ceramics or other materials that are compatible with a substrate 102 including a ceramic or CMC. For example, bond coat 506 may include mullite (aluminum silicate, Al₆Si₂O₁₃, silica, silicides, silicon, or the like. Bond coat 506 may further include other ceramics, such as rare earth silicates including lutetium silicates (Lu: Lutetium), ytterbium silicates (Yb: Ytterbium), thulium silicates (Tm: Thulium), erbium silicates (Er: Erbium), holmium silicates (Ho: Holmium), dysprosium silicates (Dy: Dysprosium), terbium silicates (Tb: Terbium), gadolinium silicates (Gd: Gadolinium), europium silicates (Eu: Europium), samarium silicate (Sm: Samarium), promethium silicates (Pm: Promethium), neodymium silicates (Nd: Neodymium), praseodymium silicates (Pr: Praseodymium), cerium silicates (Ce: Cerium), lanthanum silicates (La: Lanthanum), yttrium silicates (Y: Yttrium), scandium silicates (Sc: Scandium), or the like. Some preferred compositions of a bond coat 506 for depositing over a CMC substrate 102 include silicon, mullite and ytterbium silicate.

Bond coat 506 may be selected based on a number of considerations, including the chemical composition and phase constitution of reinforced coating 504 and substrate 102. For example, when substrate 102 includes a superalloy with γ-Ni + γ'-Ni₃Al phase constitution, bond coat 506 preferably includes a γ-Ni + γ'-Ni₃Al phase constitution to better match the coefficient of thermal expansion of substrate 102, and therefore increase the mechanical stability (adhesion) of bond coat 506 to substrate 102. Alternatively, when substrate 102 comprises a CMC, bond coat 506 preferably comprises silicon and/or a ceramic, such as, for example, mullite or a rare earth silicate.

In some embodiments, bond coat 506 may include multiple layers. For example, in some embodiments where the substrate 102 is a CMC including silicon carbide, a bond coat 506 including a first layer of silicon may be deposited on substrate 102, followed by the deposition of a second layer including mullite (aluminum silicate, 3Al₂O₃-2SiO₂) or a rare earth silicate. The bond coat 506 including multiple layers may be desirable because the silicon layer provides bonding while the ceramic bond coat provides a gradual transition of thermal expansion and prevents water vapor from reaching the silicon layer.

In other embodiments, such as article 100 illustrated in FIG. 1, the article 100 may not include a bond coat 506, and reinforced coating 104 may be deposited directly on substrate 102. Bond coat 506 may not be required or desired when reinforced coating 104 and substrate 102 are chemically and/or mechanically compatible. For example, in embodiments in which reinforced coating 104 and substrate 102 adhere sufficiently strongly to each other, a bond coat 506 may not be necessary. Additionally, in embodiments where the coefficients of thermal expansion of substrate 102 and reinforced coating 104 are sufficiently similar, a bond coat 506 may not be necessary.

FIG. 6 illustrates a cross-sectional view of an article 600 including a first oxide layer 608 and a second oxide layer 610, in addition to reinforced coating 604, deposited over substrate 102. First oxide layer 608 and second oxide layer 610 may provide additional properties, such as, for example, calcia-magnesia-alumina-silicate (CMAS) resistance, additional thermal insulation, additional environmental protection, prevention of reaction between substrate 102 and reinforced coating 604, or the like.

As illustrated in FIG. 6, first oxide layer 608 may be deposited directly on substrate 102, reinforced coating 604 may be deposited directly on first oxide layer 608, and second oxide layer 610 may be deposited directly on reinforced coating 604. However, in other embodiments, article 600 may include only one of first oxide layer 608 and second oxide layer 610. Further, in some embodiments, article 600 may include a bond coat 506 deposited over substrate 102 in combination with one or both of first oxide layer 608 and second oxide layer 610. For example, article 600 may include a bond coat 506 deposited over substrate 102, first oxide layer 608 deposited over bond coat 506 and reinforced coating 604 deposited over first oxide layer 608. As another example, article 600 may include reinforced coating 604 deposited over bond coat 506 and second oxide layer 610 deposited over reinforced coating 604.

First oxide layer 608 may include, for example, alumina, zirconia and a rare earth oxide, hafnia and a rare earth oxide, a rare earth silicate, a rare earth silicate and silicon, a glass ceramic such as BAS, BSAS, SAS, CAS, MAS or LAS, or mullite.

In some embodiments, first oxide layer 608 may prevent chemical reaction between reinforced coating 604 and substrate 102 or reinforced coating 604 and bond coat 506. In some embodiments, first oxide layer 608 may provide additional environmental protection for substrate 102, such as, for example, when reinforced coating 604 is a TBC deposited over substrate 102 including a ceramic or CMC.

Second oxide layer 610 may include rare earth oxide stabilized zirconia, rare earth oxide stabilized hafnia, rare earth silicates, glass ceramics (including, for example, BAS, BSAS, SAS, CAS, MAS and LAS), and the like. Second oxide layer 610 may provide environmental or thermal protection for substrate 102.

In some embodiments, second oxide layer 610 may be a sacrificial layer which provides protection for reinforced layer 604 from CMAS. For example, as described in further detail in U.S. Patent Application Serial No. 12/016,649, entitiled "CMAS-Resistant Thermal Barrier Coatings," to Lee, which is incorporated herein by reference in its entirety, a CMAS-resistant layer including a rare earth oxide and essentially free of zirconia and hafnia may be deposited over a TBC or an EBC to provide CMAS-degradation resistance.

Each of first and second oxide layers 608 and 610 may be deposited over substrate 102 using a variety of coating techniques, including, for example, plasma spraying, physical vapor deposition, cathodic arc deposition, chemical vapor deposition, slurry dip coating, sol-gel coating, electrophoretic deposition, or the like. First and second oxide layer 608 and 610 may be deposited over substrate 102 using the same coating technique, or may be deposited over substrate using different coating techniques.

In some embodiments, at least one of first and second oxide layers 608 and 610 may also include a reinforcement. For example, second oxide layer 610 may be a sacrificial layer including a rare earth oxide and a SiC or Si₃N₄ reinforcement. In addition, article 600 may include further oxide layers in addition to first and second oxide layers 608 and 610. The additional oxide layers may further provide or tailor the properties of the coating including first and second oxide layer 608 and 610, reinforced coating 604 and any additional oxide layers.

While the present disclosure has been primarily directed to TBCs or EBCs including an oxide matrix and a reinforcement within the oxide matrix, the invention is not so limited. For example, an oxide matrix and reinforcement within the oxide matrix may be used in other layers of a coating, such as, for example a bond coat.

Various embodiments of the present invention may be further understood by reference to the following numbered paragraphs:
1. A reinforced coating comprising:
   an oxide matrix; and
   a reinforcement within the oxide matrix, wherein the reinforcement comprises at least one of SiC and Si₃N₄.
2. The reinforced coating of paragraph 1, wherein the reinforcement comprises at least one of particles, whiskers, platelets and chopped fibers.
3. The reinforced coating of paragraph 1, wherein the oxide matrix comprises at least one of alumina, zirconia, hafnia, a rare earth oxide, rare earth oxide-stabilized zirconia, rare earth oxide-stabilized hafnia, a rare earth silicate, a glass ceramic and mullite.
4. The reinforced coating of paragraph 1, wherein the coating comprises a thermal barrier coating.
5. The reinforced coating of paragraph 1, wherein the coating comprises an environmental barrier coating.
6. An article comprising:
   a substrate; and
   a reinforced coating deposited over the substrate, wherein the coating comprises an oxide matrix and a reinforcement within the oxide matrix, and wherein the reinforcement comprises at least one of SiC and Si₃N₄.
7. The article of paragraph 6, wherein the reinforced coating is deposited directly on the substrate.
8. The article of paragraph 6, wherein the reinforcement comprises at least one of particles, whiskers, platelets, and chopped fibers.
9. The article of paragraph 6, wherein the oxide matrix comprises at least one of alumina, zirconia, hafnia, a rare earth oxide, rare earth oxide-stabilized zirconia, rare earth oxide-stabilized hafnia, a rare earth silicate, a glass ceramic and mullite.
10. The article of paragraph 6, further comprising a bond coat deposited over the substrate, and wherein the coating is deposited over the bond coat.
11. The article of paragraph 10, wherein the bond coat comprises at least one of silicon, a silicide, an MCrAlY alloy, a β-NiAl alloy, a β-Pt-NiAl alloy and a γ-Ni + γ'-Ni₃Al alloy.
12. The article of paragraph 6, wherein the substrate comprises at least one of a ceramic or CMC.
13. The article of paragraph 6, wherein the substrate comprises a superalloy.
14. The article of paragraph 6, further comprising an oxide layer deposited over the substrate, wherein the reinforced coating is deposited over the oxide layer.
15. The article of paragraph 14, wherein the oxide layer comprises a first oxide layer, wherein the article further comprises a second oxide layer deposited over the reinforced coating.
16. The article of paragraph 15, further comprising a bond coat that overlays the substrate, and wherein the first oxide layer overlays the bond coat.
17. The article of paragraph 6, further comprising an oxide layer deposited over the coating.
18. The article of paragraph 6, wherein the article comprises at least one of a turbine blade, a turbine vane, a blade track and a combustor liner.
19. A method comprising:
   depositing over a substrate a reinforced coating comprising an oxide matrix and a reinforcement within the oxide matrix, wherein the reinforcement comprises at least one of SiC and Si₃N₄.
20. The method of paragraph 19, further comprising depositing over the substrate a bond coat, and wherein depositing over the substrate the reinforced coating comprises depositing over the bond coat the reinforced coating.
21. The method of paragraph 20, wherein depositing over the bond coat the reinforced coating comprises depositing directly on the bond coat the reinforced coating.
22. The method of paragraph 18, further comprising depositing over the substrate an oxide layer.
23. The method of paragraph 22, wherein depositing over the substrate the reinforced coating comprises depositing over the oxide layer the reinforced coating.
24. The method of paragraph 22, wherein depositing over the substrate the oxide layer comprises depositing over the reinforced coating the oxide layer.

Various embodiments of the invention have been described. These and other embodiments are within the scope of the following claims.

## Claims

1. A reinforced coating (104, 204, 304) comprising:
an oxide matrix (106, 206, 306); and
a reinforcement (108, 208, 308) within the oxide matrix (106, 206, 306), wherein the reinforcement (108, 208, 308) comprises at least one of SiC and Si₃N₄;
**characterized in that** the oxide matrix (106, 206, 306) comprises at least one of alumina, zirconia, hafnia, a rare earth oxide, a rare earth oxide-stabilized zirconia, a rare earth oxide-stabilized hafnia, a rare earth silicate, a glass ceramic, or mullite,

2. The reinforced coating (104, 204, 304) of claim 1, wherein the reinforcement (108, 208, 308) comprises at least one of particles, whiskers, platelets and chopped fibers.

3. The reinforced coating (104, 204, 304) of claim 1 or 2, wherein the reinforced coating (104, 204, 304) comprises at least one of a thermal barrier coating or an environmental barrier coating.

4. An article (100, 200, 300) comprising:
a substrate (102, 202, 302); and
the reinforced coating (104, 204, 304) of any of claims 1 to 3.

5. The article (100, 200, 300) of claim 4, wherein the reinforced coating (104, 204, 304) is deposited directly on the substrate (102, 202, 302).

6. The article (100, 200, 300) of claim 4, further comprising a bond coat (506) deposited over the substrate (102, 202, 302), and wherein the coating (104, 204, 304) is deposited over the bond coat (506).

7. The article (100, 200, 300) of claim 6, wherein the bond coat (506) comprises at least one of silicon, a silicide, an MCrAlY alloy, a β-NiAl alloy, a β-Pt-NiAl alloy and a γ-Ni + γ'-Ni₃Al alloy.

8. The article (100, 200, 300) of any of claims 4 to 7, wherein the substrate (102, 202, 302) comprises at least one of a superalloy, a ceramic or a ceramic matrix composite.

9. The article (100, 200, 300) of any of claims 4 to 8, further comprising an oxide layer (608) deposited over the substrate (102, 202, 302), wherein the reinforced coating (104, 204, 304) is deposited over the oxide layer (608).

10. The article (100, 200, 300) of claim 9, wherein the oxide layer (608) comprises a first oxide layer (608), wherein the article (100, 200, 300) further comprises a second oxide layer (610) deposited over the reinforced coating (104, 204, 304).

11. A method comprising:
depositing over a substrate (102, 202, 302) a reinforced coating (104, 204, 304) comprising an oxide matrix (106, 206, 306) and a reinforcement (108, 208, 308) within the oxide matrix (106, 206, 306), wherein the reinforcement (108, 208, 308) comprises at least one of SiC and Si₃N₄;
**characterized in that** the oxide matrix (106, 206, 306) comprises at least one of alumina, zirconia, hafnia, a rare earth oxide, a rare earth oxide-stabilized zirconia, a rare earth oxide-stabilized hafnia, a rare earth silicate, a glass ceramic, or mullite.

12. The method of claim 11, further comprising depositing over the substrate (102, 202, 302) an oxide layer (608, 610).

13. The method of claim 12, wherein depositing over the substrate (102, 202, 302) the reinforced coating (104, 204, 304) comprises depositing over the oxide layer (608) the reinforced coating (104, 204, 304).

14. The method of claim 12, wherein depositing over the substrate (102, 202, 302) the oxide layer (610) comprises depositing over the reinforced coating (104, 204, 304) the oxide layer (610).

## Patentansprüche

1. Verstärkungsbeschichtung (104, 204, 304), umfassend:
eine Oxidmatrix (106, 206, 306); und
eine Verstärkung (108, 208, 308) in der Oxidmatrix (106, 206, 306), wobei die Verstärkung (108, 208, 308) mindestens eines von SiC und Si₃N₄ ist;
**dadurch gekennzeichnet, dass** die Oxidmatrix (106, 206, 306) mindestens eines von Aluminiumoxid, Zirkonoxid, Hafnia, einem seltenen Erdenoxid, einem mit seltenem Erdenoxid stabilisierten Zirkonoxid, einem mit seltenem Erdenoxid stabilisierten Hafnia, einem seltenen Erdensilikat, einer Glaskeramik oder Mullit umfasst.

2. Verstärkungsbeschichtung (104, 204, 304) nach Anspruch 1, wobei die Verstärkung (108, 208, 308) mindestens eines von Partikeln, Faserkristallen, Plättchen und Kurzfasern umfasst.

3. Verstärkungsbeschichtung (104, 204, 304) nach Anspruch 1 oder 2, wobei die Verstärkungsbeschichtung (104, 204, 304) mindestens eines von einer thermischen Sperrbeschichtung oder einer Umweltsperrbeschichtung umfasst.

4. Artikel (100, 200, 300), umfassend:
ein Substrat (102, 202, 302); und
die Verstärkungsbeschichtung (104, 204, 304) nach einem der Ansprüche 1 bis 3.

5. Artikel (100, 200, 300) nach Anspruch 4, wobei die Verstärkungsbeschichtung (104, 204, 304) direkt auf das Substrat (102, 202, 302) aufgebracht ist.

6. Artikel (100, 200, 300) nach Anspruch 4, ferner umfassend eine Bindeschicht (506), die auf das Substrat (102, 202, 302) aufgebracht ist, und wobei die Beschichtung (104, 204, 304) auf die Bindeschicht (506) aufgebracht ist.

7. Artikel (100, 200, 300) nach Anspruch 6, wobei die Bindeschicht (506) mindestens eines von Silikon, einem Silizid, einer MCrAlY-Legierung, einer β-NiAl-Legierung, einer β-Pt-NiAl-Legierung und einer γ-Ni- + γ'- Ni₃Al-Legierung umfasst.

8. Artikel (100, 200, 300) nach einem der Ansprüche 4 bis 7, wobei das Substrat (102, 202, 302) mindestens eines von einer Superlegierung, einer Keramik oder einem Keramikmatrixverbund umfasst.

9. Artikel (100, 200, 300) nach einem der Ansprüche 4 bis 8, ferner umfassend eine Oxidschicht (608), die auf das Substrat (102, 202, 302) aufgebracht ist, wobei die Verstärkungsbeschichtung (104, 204, 304) auf die Oxidschicht (608) aufgebracht ist.

10. Artikel (100, 200, 300) nach Anspruch 9, wobei die Oxidschicht (608) eine erste Oxidschicht (608) umfasst, wobei der Artikel (100, 200, 300) ferner eine zweite Oxidschicht (610) umfasst, die auf die Verstärkungsbeschichtung (104, 204, 304) aufgebracht ist.

11. Verfahren, umfassend:
Aufbringen einer Verstärkungsbeschichtung (104, 204, 304) umfassend eine Oxidmatrix (106, 206, 306) und eine Verstärkung (108, 208, 308) in der Oxidmatrix (106, 206, 306) auf ein Substrat (102, 202, 302), wobei die Verstärkung (108, 208, 308) mindestens eines von SiC und Si₃N₄ umfasst;
**dadurch gekennzeichnet, dass** die Oxidmatrix (106, 206, 306) mindestens eines von Aluminiumoxid, Zirkonoxid, Hafnia, einem seltenen Erdenoxid, einem mit seltenem Erdenoxid stabilisierten Zirkonoxid, einem mit seltenem Erdenoxid stabilisierten Hafnia, einem seltenen Erdensilikat, einer Glaskeramik oder Mullit umfasst.

12. Verfahren nach Anspruch 11, ferner umfassend ein Aufbringen einer Oxidschicht (608, 610) auf das Substrat (102, 202, 302).

13. Verfahren nach Anspruch 12, wobei ein Aufbringen der Verstärkungsbeschichtung (104, 204, 304) auf das Substrat (102, 202, 302) ein Aufbringen der Verstärkungsbeschichtung (104, 204, 304) auf die Oxidschicht (608) umfasst.

14. Verfahren nach Anspruch 12, wobei ein Aufbringen der Oxidschicht (610) auf das Substrat (102, 202, 302) ein Aufbringen der Oxidschicht (610) auf die Verstärkungsbeschichtung (104, 204, 304) umfasst.

## Revendications

1. Revêtement renforcé (104, 204, 304) comprenant :
une matrice d'oxyde (106, 206, 306) ; et
un renfort (108, 208, 308) au sein de la matrice d'oxyde (106, 206, 306), ledit renfort (108, 208, 308) comprenant au moins un constituant parmi le SiC et le Si₃N₄ ;
**caractérisé en ce que** la matrice d'oxyde (106, 206, 306) comprend au moins un constituant parmi l'alumine, la zircone, l'oxyde d'hafnium, un oxyde de terres rares, une zircone stabilisée avec un oxyde de terres rares, un oxyde d'hafnium stabilisé avec un oxyde de terres rares, un silicate de terres rares, une vitrocéramique ou la mullite.

2. Revêtement renforcé (104, 204, 304) de la revendication 1, dans lequel le renfort (108, 208, 308) comprend au moins un constituant parmi des particules, des trichites, des plaquettes et des fibres découpées.

3. Revêtement renforcé (104, 204, 304) de la revendication 1 ou 2, ledit le revêtement renforcé (104, 204, 304) comprenant au moins un revêtement de barrière thermique ou un revêtement de barrière environnementale.

4. Article (100, 200, 300) comprenant :
un substrat (102, 202, 302) ; et
le revêtement renforcé (104, 204, 304) de l'une quelconque des revendications 1 à 3.

5. Article (100, 200, 300) de la revendication 4, dans lequel le revêtement renforcé (104, 204, 304) est déposé directement sur le substrat (102, 202, 302).

6. Article (100, 200, 300) de la revendication 4, comprenant en outre une couche d'accrochage (506) déposée sur le substrat (102, 202, 302) et dans lequel le revêtement (104, 204, 304) est déposé sur la couche d'accrochage (506).

7. Article (100, 200, 300) de la revendication 6, dans lequel la couche d'accrochage (506) comprend au moins un constituant parmi le silicium, un siliciure, un alliage MCrAlY, un alliage β-NiAl, un alliage β-Pt-NiAl et un alliage γ-Ni + γ'- Ni₃Al.

8. Article (100, 200, 300) de l'une quelconque des revendications 4 à 7, dans lequel le substrat (102, 202, 302) comprend au moins un superalliage, une céramique ou un composite à matrice céramique.

9. Article (100, 200, 300) de l'une quelconque des revendications 4 à 8, comprenant en outre une couche d'oxyde (608) déposée sur le substrat (102, 202, 302), dans lequel le revêtement renforcé (104, 204, 304) est déposé sur la couche d'oxyde (608).

10. Article (100, 200, 300) de la revendication 9, dans lequel la couche d'oxyde (608) comprend une première couche d'oxyde (608), dans lequel l'article (100, 200, 300) comprend en outre une deuxième couche d'oxyde (610) déposée sur le revêtement renforcé (104, 204, 304).

11. Procédé comprenant :
le dépôt sur un substrat (102, 202, 302) d'un revêtement renforcé (104, 204, 304) comprenant une matrice d'oxyde (106, 206, 306) et un renfort (108, 208, 308) au sein de la matrice d'oxyde (106, 206, 306), dans lequel le renfort (108, 208, 308) comprend au moins un constituant parmi le SiC et le Si₃N₄;
**caractérisé en ce que** la matrice d'oxyde (106, 206, 306) comprend au moins un constituant parmi l'alumine, la zircone, l'oxyde d'hafnium, un oxyde de terres rares, une zircone stabilisée avec un oxyde de terres rares, un oxyde d'hafnium stabilisé avec un oxyde de terres rares, un silicate de terres rares, une vitrocéramique ou la mullite.

12. Procédé de la revendication 11, comprenant en outre le dépôt sur le substrat (102, 202, 302) d'une couche d'oxyde (608, 610).

13. Procédé de la revendication 12, dans lequel le dépôt sur le substrat (102, 202, 302) du revêtement renforcé (104, 204, 304) comprend le dépôt sur la couche d'oxyde (608) du revêtement renforcé (104, 204, 304).

14. Procédé de la revendication 12, dans lequel le dépôt sur le substrat (102, 202, 302) de la couche d'oxyde (610) comprend le dépôt sur le revêtement renforcé (104, 204, 304) de la couche d'oxyde (610).
